# EUROPÄISCHE PATENTANMELDUNG

(11) **EP 2 458 087 A1**
(43) Veröffentlichungstag der Anmeldung: **30.05.2012**
(21) Anmeldenummer: 11189653.6
(22) Anmeldetag: 18.11.2011
(51) Int. Cl.: D21G 1/02, F16C 13/00

(54) **Walze und Verfahren zur Druckbehandlung einer Warenbahn**

(30) Priorität: 25.11.2010 DE 102010061915
(71) Anmelder: Voith Patent GmbH, 89520 Heidenheim (DE)
(72) Erfinder: Krüger, Lars, 47803 Krefeld (DE)

(57) **Zusammenfassung**

Die Erfindung betrifft eine Walze für die Druckbehandlung einer Bahn mit einer umlaufenden, den arbeitenden Walzenumfang bildenden Hohlwalze (2), mit einem Querhaupt (1), mit gegen den Innenumfang (3) der Hohlwalze (1) anpressbaren Stützelementen (10), mit einer Druckfluidzuführung (4) und mit einer Steuer- und Regeleinrichtung (20), die für jedes einzelne Stützelement (10) oder jede kleine Gruppe von Stützelementen (10) ein mit der Druckfluidzuführung (4) verbundenes, durch mittels eines Betätigers (6) herbeiführbar stetige Verlagerung eines Ventilgliedes (9) steuerbares Ventil (5) umfasst, wobei der Betätiger (6) einen Formkörper (7) umfasst, der bei Anlegen einer elektrischen Spannung in eindeutiger Abhängigkeit von dieser in mindestens einer Dimension seine Ausdehnung verändert. Um eine Druckbehandlung einer Bahn auch bei hochfrequenten Schwingungen der Hohlwalze zu ermöglichen umfasst die Steuer- und Regeleinrichtung (20) zusätzlich folgendes:
- je einen Druckaufnehmer (21) innerhalb des Druckraums (11) jedes einzelnen Stützelements (10) oder einer kleinen Gruppe von Stützelementen (10),
- eine rechnerunterstützte Auswerteeinheit (23) für die gemessenen Drücke, die in der Lage ist, quasistatische Drücke und überlagerte Druckschwankungen getrennt zu erfassen
- eine Spannungsversorgungseinrichtung (24) für jeden Formkörper (7), die eine mittlere Spannung zur Einstellung eines gewünschten quasistatischen Druckes und eine überlagerte hochfrequente Spannung zur Kompensation der Druckschwankungen erzeugt.

## Beschreibung

Bei der Erfindung handelt es sich um eine Walze und ein Verfahren zur Druckbehandlung einer Warenbahn mit dieser Walze.

Die Walze entspricht im Oberbegriff gemäß Anspruch 1 genau der im ersten Anspruch der DE 198 02 723 A1 erfundenen Walze inklusive des dort aufgeführten kennzeichnenden Teils. Diese Erfindung beschreibt demnach eine Weiterentwicklung der Walze gemäß DE 198 02 723 A1. Auch für den Begriff "Walze" dieser Erfindung gilt die Einbeziehung der zugehörenden Steuer- und Regeleinrichtungen.

Das Verfahren zur Druckbehandlung einer Warenbahn wird durch den Oberbegriff des Anspruchs 10 beschrieben und benutzt die erfindungsgemäße Walze.

Eine Walze nach dem Oberbegriff hat sich für Produktionen von Bahnen mit einem gleichförmigen Querprofil in vielen Fällen als dienlich herausgestellt. Mit ihr können zufriedenstellende, über die Bahnbreite verlaufende Profile, beispielsweise eine gleichmäßige Dicke, ein gleichmäßiger Glanz, eine gleichmäßige Glätte oder ähnliche Bahnparameter eingestellt werden.

Beim Einsatz dieser sogenannten Durchbiegungseinstellwalzen, die die Anmelderin unter dem Namen NIPCO verkauft, erfährt der Betreiber häufig aber nicht nur die Regelungsproblematik, die daraus resultiert, die Walze und alle ihre Stützelemente über die axiale Länge exakt einzustellen, so dass die Druckbehandlung der Bahn zu dem gewünschten Ergebnis führt. Vielmehr gibt es oft das Thema, dass die Walze aufgrund von Resonanzerscheinungen schwingt. Je nach Schwingfrequenz in der Größenordnung von 100 bis 1000 Hz erhält man auf dem Walzenumfang oder in der Bahn Querstreifen, die unerwünscht sind. Diese Streifen nennt man Barringerscheinungen, die in der Regel zum Ausfall der Walze und zur Ausschussproduktion von oben genannten Bahnen führen.

Aus der DE 295 09 545 U1 ist eine Walze mit Schwingungsdämpfer, insbesondere zur Herstellung oder Behandlung von Faserstoffbahnen, z.B. Papier- oder Kartonbahnen, bekannt. Es handelt sich auch um eine Walze mit einem stationären Querhaupt und mit einer um dieses Querhaupt rotierenden Hohlwalze. In dem Querhaupt ist eine Reihe von z.B. zylindrischen Druckräumen vorgesehen, die sich in radialer Richtung erstrecken und je ein radial verschiebbares Stützelement aufnehmen. Jeder Druckraum kann mit einer Druckflüssigkeit gefüllt werden, die eine hydraulische Stützkraft von der Zentralachse über das Stützelement auf die Hohlwalze überträgt, um so gezielt eine Durchbiegung des Walzenmantels einstellen zu können. Anstelle mehrerer Druckräume mit je einem Stützelement kann ein einziger langgestreckter Druckraum mit einem einzigen langgestreckten Stützelement vorhanden sein. Zum Zuführen der Druckflüssigkeit in die Druckräume ist in der stationären Zentralachse ein beispielsweise zentral angeordneter Zuführkanal vorgesehen, der über je eine verengte Leitung (z. B. über einen Drosselkanal) mit jedem der Druckräume verbunden ist. Die Dämpfung wirkt hier demnach passiv. Der Aufwand, eine solche Walze zu fertigen und später anzusteuern, ist groß.

Eine andere Walzenausführung mit innen liegenden, diesmal jedoch aktiven Aktuatoren zur Dämpfung von Schwingungen findet sich in der DE 100 08 800 B4. Walzen der dort beschriebenen Art sind in Kalandern einsetzbar. Allerdings ist die Verwendung teuer und es bedarf eines erheblichen konstruktiven und fertigungstechnischen Aufwandes. Eine Möglichkeit zur gezielten Einstellung einer Durchbiegung ist bei diesem Walzentyp nicht gegeben. Die Aktuatoren müssen direkt auf die Hohlwalze wirken können.

Leider ist es so, dass Dämpfungen der Schwingungen des Systems bei den relevanten Frequenzen zwischen 100 und 1000 Hz über ein typisches Wälzlager (in der Regel Pendelrollenlager) kaum möglich sind. Schwingungen zwischen 100 und 1000 Hz werden im Folgenden "hochfrequente Schwingungen" genannt. Auch aktive Systeme, die Kräfte in die Achse einleiten oder ein Biegemoment in die Achse einbringen, haben wenig Aussicht auf Erfolg, da die Kräfte oder Biegemomente nicht über die Pendelrollenlager übertragen werden können. Umgekehrt kann meist auch keine störende Schwingung der Hohlwalze an das Querhaupt übertragen werden und dort dann dissipativ vernichtet werden. Daher schwingt die Hohlwalze beim Auftreten eines Schwingungsproblems an der Walze nahezu ungestört.

Es ist die Aufgabe der Erfindung, eine Walze, die zumindest ähnlich der DE 198 02 723 A1 ausgebildet ist, so weiter zu entwickeln, dass eine Druckbehandlung einer Bahn auch bei hochfrequenten Schwingungen der Hohlwalze möglich bleibt.

Die Aufgabe wird hinsichtlich des Vorrichtungsanspruches der Walze, also Anspruch 1, dadurch gelöst, dass die Steuer- und Regeleinrichtung zusätzlich folgendes umfasst:
- je einen Druckaufnehmer innerhalb des Druckraums jedes einzelnen Stützelements oder einer kleinen Gruppe von Stützelementen,
- eine rechnerunterstützte Auswerteeinheit für die gemessenen Drücke, die in der Lage ist, quasistatische Drücke und überlagerte Druckschwankungen getrennt zu erfassen
- eine Spannungsversorgungseinrichtung für jeden Formkörper, die eine mittlere Spannung zur Einstellung eine gewünschten quasistatischen Druckes und eine überlagerte hochfrequente Spannung zur Kompensation der Druckschwankungen erzeugt.

Bezüglich des Verfahrensanspruchs 10 zur Druckbehandlung einer Bahn, wobei die Walze gegen die Bahn gepresst wird, wird die Aufgabe dadurch gelöst, dass
- je ein Druckaufnehmer innerhalb des Druckraums jedes einzelnen Stützelements oder einer kleinen Gruppe von Stützelementen den Druck misst und an eine rechnerunterstützte Auswerteeinheit als elektrisches Signal weitergibt,
- die rechnerunterstützte Auswerteeinheit aus den gemessenen Drücken die quasistatischen Drücke und überlagerte Druckschwankungen erfasst und
- mit Hilfe der Steuer- und Regeleinrichtung eine zusammengesetzte Spannung an jeden Formkörper abgegeben wird, die zur Erzeugung eines gewünschten quasistatischen Druckes und eines überlagerten hochfrequenten Kompensationsdruckes bezüglich von Druckschwankungen dient.

Die Betriebsweise mit dieser Walze erfolgt demnach wie folgt geschildert. Die Drücke in den einzelnen, die Stützelemente beaufschlagenden Druckkammern werden gemessen. Mittels der Auswerteeinheit der Steuerungs- und Regelungseinrichtung kann differenziert werden zwischen dem quasistatischen Druck, der die mittlere und gewünschte Streckenlast auf die Bahn bestimmt, und den Druckschwankungen aufgrund von Schwingungen der Hohlwalze. Die Steuer- und Regeleinrichtung kann für jedes Stützelement (oder eine kleine Gruppe von Stützelementen), ein Ventil auf ein Maß öffnen, das einem Druckwert entspricht, der einen bestimmten quasistatischen Druck bestimmt, den das jeweilige Stützelement auf die Hohlwalze ausübt. Dieser quasistatische Druck kann an jedem Stützelement unterschiedlich sein, je nachdem wie ein Streckenlastprofil über die Breite oder ggf. auch die Durchbiegung der Walze beeinflusst werden soll. Bis dahin stimmt die Einstellung mit der des Standes der Technik, beispielweise gemäß der DE 198 02 723 A1 überein. Erfindungsgemäß werden nun neben dem quasistatischen Druckwert auch die Schwankungen über einen Druckaufnehmer ermittelt. Analog der Druckschwankungen im Druckraum wird zudem vorgesehen, durch ein exaktes hochfrequentes Verstellen des Ventils, den Druckschwankungen, die aus der Resonanz der Hohlwalze resultieren zu begegnen und die Schwingungen der Hohlwalze dadurch zu dämpfen. Dazu wird auf jeden Formkörper eine für die Erzeugung des quasistatischen Drucks notwendige mittlere Spannung abgegeben, die jedoch von einer beispielsweise sinusförmigen Spannung mit der gleichen Frequenz, wie die gemessenen Schwingungen haben, überlagert ist.

Es ist von Vorteil, wenn der quasistatische Druck aufgrund eines vorgesehenen Streckenlastsollprofils der Hohlwalze vorgegeben wird. Um eine bestimmte Dicke oder einen bestimmten Glanz auf einer Bahn zu erzielen bedarf es einer gewissen "Grundstreckenlast", beispielsweise in einem Walzenspalt. Das heißt, aufgrund der in der Regel nach einer Behandlungsvorrichtung mit der Walze vorgenommenen Querprofilmessung wird der notwendige quasistatische Druck in einem Stützelement bestimmt und durch die die Steuer- und Regeleinrichtung eingestellt.

Mit Vorteil ist dafür gesorgt, dass die überlagerte hochfrequente Spannung in ihrer Frequenz einer vorzugsweise phasenverschobenen Resonanzfrequenz der Hohlwalze entspricht. Mit der hochfrequenten Spannungsüberlagerung wird durch das "schwingende" Ventil auch der Druck entsprechend geändert. Dadurch können mit der gleichen Frequenz, in der die Walze schwingt, auch Gegenschwingungen eingeleitet werden, die durch ihre Phasenverschiebung in der Lage sind, die Schwingungen der Walze zu dämpfen.

Es ist günstig, wenn wenigstens ein Ventil innerhalb eines Stützelementes angeordnet ist. Dadurch kann man das Stützelement unmittelbar ansteuern, ohne dass Druckverluste durch längere Leitungen zwischen dem Ventil und dem Stützelement entstehen.

Vorzugsweise ist das Ventil ein Sitzventil. Es kommt vor, dass die Walze sehr plötzlich keinen Druck mehr auf die Bahn ausüben darf. In diesem Fall kann der Betätiger das Ventil schließen, so dass sich der Druck unter dem Stützelement abbauen kann. Das geschieht beispielsweise dadurch, dass das Druckfluid im Druckraum beim Absenken des Stützelementes durch die hydrostatischen Taschen in den Walzeninnenraum austritt.

Bevorzugt umfasst das Ventilglied einen Schieber. Schieberventile sind einfach in ihrer Herstellung bzw. bereits fertig mit zuverlässiger Funktion auf dem Markt zu erwerben.

Über ein solches Schieberventil ist es auch besonders einfach die bevorzugte Ausgestaltung zu erwirken, dass das Ventil strömungskraftkompensiert ist. Das ist in einigen Fällen sehr wichtig, denn die überlagerte hochfrequente Schwingung des Ventils zur Kompensation der Druckschwankungen ist sehr empfindlich. Unterschiedliche Reibungen oder die Notwendigkeit den Ventilkörper für die Hin- und Rückbewegung über die gleiche Entfernung mit unterschiedlichen Drücken beaufschlagen zu müssen, kann durch ein solches strömungskraftkompensiertes Ventil vermieden werden.

Vorzugsweise liegt der Formkörper in der Druckfluidzuführung. Durch das vorbeiströmende Druckfluid (in der Regel Öl) wird der Formkörper gekühlt. Der durch die angelegte hochfrequente Spannung sich ausdehnende und zusammenziehende Formkörper kann unter Umständen ansonsten zu warm werden.

Bevorzugt bilden das Stützelement und das Ventil eine Baueinheit. Dadurch kann die Formgebung des Querhaupts erheblich vereinfacht werden. Es kann beispielsweise aus einem handelsüblichen Profil bestehen, das eine glatte Fläche aufweist. Auf diese Fläche können dann in axialer Richtung eine Baueinheit aus Stützelement und Ventil nebeneinander angebracht werden. Über einen in oder an dem Querhaupt befindlichen Kanal kann jedes Ventil eingangsseitig mit dem gleichen Fluiddruck beaufschlagt werden. Das Ventil steuert den Druck im Druckraum des Stützelementes.

Die Erfindung wird im Folgenden anhand eines Ausführungsbeispiels unter Bezugnahme auf die Zeichnungen näher erläutert. In diesen zeigen
- Figur 1: eine schematische, teilweise geschnittene Darstellung einer erfindungsgemäßen Walze und
- Figur 2: eine symbolische Darstellung eines nutzbaren Ventils.

Die mit dem Bezugszeichen 25 gekennzeichnete Walze besitzt ein nicht drehbares Querhaupt 1, das über die gesamte Länge der Walze reicht und an seinen Enden in nicht dargestellter Weise gelagert ist. Um dieses Querhaupt ist eine Hohlwalze 2 (ausschnittsweise dargestellt) drehbar gelagert. Über die Länge der Walze sind Stützelemente (10) angeordnet, die, während sie sich auf dem Querhaupt 1 abstützen, eine Kraft auf die Hohlwalze 2 übertragen können. Durch unterschiedlich eingestellte Kräfte lässt sich so beispielsweise eine Durchbiegung korrigieren.

Die einzeln oder in kleinen Gruppen angesteuerten Stützelemente 10 besitzen einen Kopf 15 unter dem sich ein Druckraum 11 befindet. Der Kopf 15 besitzt gegenüber einem mit dem Querhaupt 1 verbundenen, vorzugsweise zylindrischen Fuß 16 eine radiale Bewegungsmöglichkeit zur Hohlwalze hin. Zwischen Kopf und Fuß befindet sich ein Druckraum 11, der über eine Dichtung 14 verschlossen ist. Ein Druckfluid wirkt im Druckraum 11 gegen den Kopf 15, der wiederum eine Kraft auf die Hohlwalze 2 ausübt. Um den Verschleiß zwischen Kopfoberfläche 17 und Walzeninnenumfang 3 zu minimieren, fließt ein Teil des Druckfluids aus dem Druckraum 11 durch Kapillaren 13 in wenigstens eine Drucktasche 12 und baut dort ein Schmierpolster auf.

In oder an dem Querhaupt befindet sich eine Versorgungsleitung 18 und jeweils eine Druckfluidzuführung 4, die das Druckfluid bis zu einem dem Druckraum 11 vorgeschalteten Ventil 5 leitet. Das Ventil 5 besitzt einen Betätiger 6, der ein Ventilglied 9 bewegt. Dadurch kann ein Ventilsitz 8 geöffnet werden, so dass Druckfluid in den Druckraum 11 geführt werden kann. In jedem Druckraum 11 ist ein individueller quasistatischer Druck aufbaubar. Der Betätiger 6 umfasst hier einen Formkörper 7, an den eine elektrische Spannung mittels einer Spannungsversorgungseinrichtung 24 angeschlossen ist. Je nachdem wie hoch die Spannung ist, dehnt sich der Formkörper 7, beispielsweise ein Piezoelement, aus und das Ventil 5 wird entsprecht dem gewünschten quasistatischen Druck für eine mittlere Streckenlast, die auf eine nicht dargestellte Bahn wirkt, geöffnet. Eine solche Bahn kann beispielsweise eine Bahn aus Papier, Textil, Vlies, Kunststofffolie oder Blech sein.

Bis hierhin entspricht die Walze noch einer Walze, wie sie in der DE 198 02 723 A1 beschrieben ist.

Hinzu kommt jetzt erfindungsgemäß, dass zunächst einmal in jedem Druckraum 11 ein Druckaufnehmer 21 vorgesehen ist, der seine Messwerte über eine Steuerleitung 22 an eine rechnerunterstützte Auswerteeinheit 23 innerhalb der Steuer- und Regeleinrichtung 20 weitergibt. Diese ist geeignet, das Messsignal in einen Anteil für den quasistatischen Druck und den Anteil, der die wechselnden Drücke aufgrund von Schwingungen betrifft, trennen zu können. Über eine Spannungsversorgungseinrichtung 24 wird weiterhin nun der Formkörper 7 und somit auch das Ventil 5 derart geregelt, dass a) eine Beaufschlagung mit einer Grundspannung zur Erzeugung des gewünschten quasistatischen Drucks und b) eine Wechselspannung zur Einstellung von veränderlichen Drücken zum Gegenwirken auf die Schwingungen übermittelt wird.

Dabei bestimmt die Grundspannung also die Streckenlast, die zur Behandlung der Bahn notwendig ist und sich ggf. aus den Ergebnissen von Messstationen nach der Walzenbehandlung bestimmen lassen. Um ein Profil einstellen zu können (Dicken-, Glanzprofil in Querrichtung der bis zu 10 m breiten laufenden Bahn) können die Grundlasten in jedem Stützelement unterschiedlich sein. Die hochfrequente Wechselspannung entspricht dagegen einer vorzugsweise phasenverschobenen Resonanzfrequenz der Hohlwalze 2.

Dadurch, dass jedem Stützelement (oder einer kleinen Gruppe) jeweils ein Ventil 5 zugeordnet ist, ist auch - im Gegensatz zu vielen anderen Bauarten dieser Walzengattung - nur eine Versorgungsleitung 18 für das Druckfluid notwendig, die sich entlang des Querhauptes 1 erstreckt. Zu jedem Ventil ist eine Druckfluidzuführung 4 vorgesehen, wobei der Formkörper 7 geschickt in den Flussstrom des Druckfluids integriert ist, damit er eine Kühlung erfährt.

Das Ventil 5 selbst kann in unmittelbarer Nähe zum Druckraum 11 eingesetzt sein, vorzugsweise direkt im Fuß 16 des Stützelementes 10. Durch ein Sitzventil kann der Druck unterhalb des angrenzenden Kopfes 15 im Druckraum 11 exakt eingestellt werden. Der Formkörper 7, der sich durch die angelegte Spannung entsprechend ausdehnt, verschiebt über ein Ventilglied 9 in genau einstellbarer Weise die Durchflussöffnung des Ventilsitzes 8.

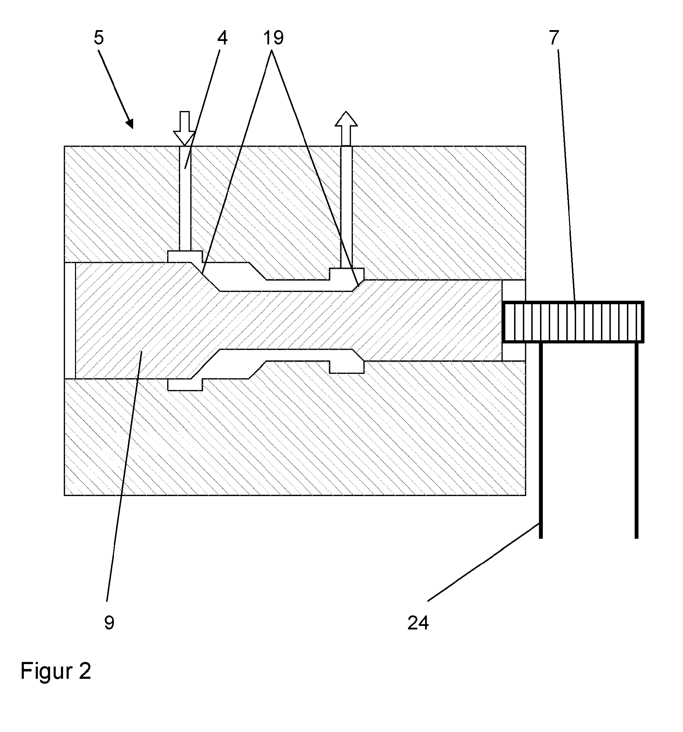

Um die Reibwirkung des Strömungseinflusses auszuschließen, wird wie in Figur 2 angedeutet ein strömungskraftkompensiertes Ventil 5 eingesetzt. Der Formkörper bewegt ein Ventilglied, das in diesem Fall einen Schieber umfasst. Der Durchfluss des Druckfluids von der Druckfluidzuführung 4 bis zum Austritt (angedeutet durch Pfeile) wird über Steuerkanten 19 eingestellt, die in ihrer Formgebung die Reibungskomponente des Druckfluids aufheben. Da die Wirkungsweise zwar nicht bei einer solchen Walze, jedoch aus der Strömungslehre bekannt ist, wird sie hier nicht weiter erläutert.

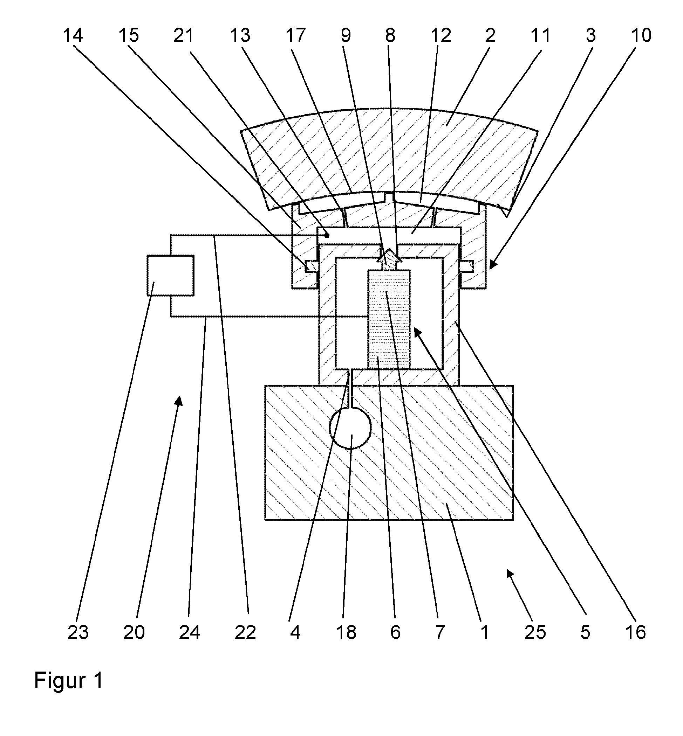

Aus Figur 1 erkennt man noch einen besonderen Vorteil der erfindungsgemäßen Walze, der für eine schnelle Wartungsmöglichkeit sorgt. In jedes der Stützelemente 10, bestehend aus Fuß und Kopf, ist das Ventil 5 integriert. Alle Elemente bilden eine Baueinheit, die auf dem Querhaupt angebracht werden kann. Dadurch wird auch automatisch die Versorgungsleitung 18 mit der Druckfluidzuführung 4 verbunden. Sollte also beispielsweise ein Kopf verschlissen oder ein Ventil verstopft sein, so kann durch Austausch dieses ganzen Moduls schnell Abhilfe geschaffen werden.

### Bezugszeichenliste

- 1: Querhaupt
- 2: Hohlwalze
- 3: Innenumfang
- 4: Druckfluidzuführung
- 5: Ventil
- 6: Betätiger
- 7: Formkörper
- 8: Ventilsitz
- 9: Ventilglied
- 10: Stützelement
- 11: Druckraum
- 12: Tasche
- 13: Kapillare
- 14: Dichtung
- 15: Kopf
- 16: Fuß
- 17: Kopfoberfläche
- 18: Versorgungsleitung
- 19: Steuerkante
- 20: Steuer- und Regeleinrichtung
- 21: Druckaufnehmer
- 22: Steuerleitung
- 23: rechnerunterstützte Auswerteeinheit
- 24: Spannungsversorgungseinrichtung
- 25: Walze

## Patentansprüche

1. Walze für die Druckbehandlung einer Bahn aus Papier, Textil, Vlies, Kunststofffolie, Blech oder dergleichen,
- mit einer umlaufenden, den arbeitenden Walzenumfang bildenden Hohlwalze (2),
- mit einem die Hohlwalze (2) der Länge nach durchgreifenden, ringsum radialen Abstand zum Innenumfang (3) der Hohlwalze (2) belassenden, an den Enden undrehbar an äußeren Abstützungen abgestützten Querhaupt (1),
- mit an dem Querhaupt (1) angeordneten, mittels eines Druckfluids in jeweils einem Druckraum (11) gegen den Innenumfang (3) der Hohlwalze (1) anpressbaren Stützelementen (10),
- mit einer Druckfluidzuführung (4)
- und mit einer Steuer- und Regeleinrichtung (20), die für jedes einzelne Stützelement (10) oder jede kleine Gruppe von Stützelementen (10) ein mit der Druckfluidzuführung (4) verbundenes, durch mittels eines Betätigers (6) herbeiführbar stetige Verlagerung eines Ventilgliedes (9) steuerbares Ventil (5) umfasst, mittels welchem jedem Stützelement (10) oder jeder kleinen Gruppe von Stützelementen (10) Druckfluid unter einem individuellen Druck zuführbar ist,
- wobei der Betätiger (6) einen Formkörper (7) umfasst, der bei Anlegen einer elektrischen Spannung in eindeutiger Abhängigkeit von dieser in mindestens einer Dimension seine Ausdehnung verändert, **dadurch gekennzeichnet, dass**
die Steuer- und Regeleinrichtung (20) zusätzlich folgendes umfasst:
- je einen Druckaufnehmer (21) innerhalb des Druckraums (11) jedes einzelnen Stützelements (10) oder einer kleinen Gruppe von Stützelementen (10),
- eine rechnerunterstützte Auswerteeinheit (23) für die gemessenen Drücke, die in der Lage ist, quasistatische Drücke und überlagerte Druckschwankungen getrennt zu erfassen
- eine Spannungsversorgungseinrichtung (24) für jeden Formkörper (7), die eine mittlere Spannung zur Einstellung eines gewünschten quasistatischen Druckes und eine überlagerte hochfrequente Spannung zur Kompensation der Druckschwankungen erzeugt.

2. Walze gemäß Anspruch 1, **dadurch gekennzeichnet, dass** der quasistatische Druck aufgrund eines vorgesehenen Streckenlastsollprofils der Hohlwalze (2) vorgegeben wird.

3. Walze gemäß Anspruch 1 oder 2, **dadurch gekennzeichnet, dass** die überlagerte hochfrequente Spannung in ihrer Frequenz einer vorzugsweise phasenverschobenen Resonanzfrequenz der Hohlwalze (2) entspricht.

4. Walze gemäß einem der Ansprüche 1 bis 3, **dadurch gekennzeichnet, dass** wenigstens ein Ventil (5) innerhalb eines Stützelementes (10) angeordnet ist.

5. Walze gemäß einem der Ansprüche 1 bis 4, **dadurch gekennzeichnet, dass** das Ventil (10) ein Sitzventil ist.

6. Walze gemäß einem der Ansprüche 1 bis 5, **dadurch gekennzeichnet, dass** das Ventilglied (9) einen Schieber umfasst.

7. Walze gemäß einem der Ansprüche 1 bis 6, **dadurch gekennzeichnet, dass** das Ventil (5) strömungskraftkompensiert ist.

8. Walze gemäß einem der Ansprüche 1 bis 7, **dadurch gekennzeichnet, dass** der Formkörper (7) in der Druckfluidzuführung (4) liegt.

9. Walze gemäß einem der Ansprüche 1 bis 8, **dadurch gekennzeichnet, dass** das Stützelement (10) und das Ventil (5) eine Baueinheit bilden.

10. Verfahren zur Druckbehandlung einer Bahn aus Papier, Textil, Vlies, Kunststofffolie, Blech oder dergleichen, mit einer Walze gemäß einem der Ansprüche 1 bis 9, wobei die Walze gegen die Bahn gepresst wird,
**dadurch gekennzeichnet, dass**
- je ein Druckaufnehmer (21) innerhalb des Druckraums (11) jedes einzelnen Stützelements (10) oder einer kleinen Gruppe von Stützelementen (10) den Druck misst und an eine rechnerunterstützte Auswerteeinheit (23) als elektrisches Signal weitergibt,
- die rechnerunterstützte Auswerteeinheit (23) aus den gemessenen Drücken die quasistatischen Drücke und überlagerte Druckschwankungen erfasst und
- mit Hilfe der Steuer- und Regeleinrichtung (20) eine zusammengesetzte Spannung an den Formkörper (7) abgegeben wird, die zur Erzeugung eines gewünschten quasistatischen Druckes und eines überlagerten hochfrequenten Kompensationsdruckes bezüglich von Druckschwankungen dient.
